# EUROPÄISCHE PATENTSCHRIFT

(11) **EP 3 510 583 B1**
(45) Veröffentlichungstag und Bekanntmachung des Hinweises auf die Patenterteilung: **08.10.2025**
(21) Anmeldenummer: 17758092.5
(22) Anmeldetag: 14.08.2017
(51) Int. Cl.: G08G 1/16, G05D 1/00

(54) **SYSTEM UND VERFAHREN ZUM STEUERN VON NUTZFAHRZEUGEN**
SYSTEM AND METHOD FOR CONTROLLING UTILITY VEHICLES
SYSTÈME ET PROCÉDÉ DE COMMANDE DE VÉHICULES UTILITAIRES

(30) Priorität: 08.09.2016 DE 102016116855
(43) Veröffentlichungstag der Anmeldung: 17.07.2019
(73) Patentinhaber: KNORR-BREMSE Systeme für Nutzfahrzeuge GmbH, 80809 München (DE)
(72) Erfinder: BALOGH, Levente, 2310 Szigetszentmiklós (HU); NEMETH, Huba, 1116 Budapest (HU); HORVATH, Csaba, 2051 Biatorbagy (HU); TIHANYI, Viktor, 1032 Budapest (HU); RAPP, Tamas, 1116 Budapest (HU)
(74) Vertreter: LifeTech IP Spies & Behrndt Patentanwälte PartG mbB
(86) Internationale Anmeldenummer: PCT/EP2017/070606
(87) Internationale Veröffentlichungsnummer: WO 2018/046248

(56) Entgegenhaltungen:
- DE-A1- 102004 047 214
- DE-A1- 102011 112 404
- DE-A1- 102014 221 777
- US-A1- 2014 236 477

## Beschreibung

Die vorliegende Erfindung bezieht sich auf ein System und ein Verfahren zum Steuern von Nutzfahrzeugen in einem eingeschränkten Bereich und insbesondere auf die Nutzung von statischen Objekten von einer Kartendatenbank zur Umgebungsdetektion. Beim autonomen Fahren von Nutzfahrzeugen ist es zunehmend wichtig, eine geeignete Umfelddetektion vorzunehmen, um dadurch in der Lage zu sein, richtige Kontrollentscheidungen für die weitere Bewegung des Nutzfahrzeuges zu treffen. Die Umfelddetektion kann beispielsweise durch einen Sensor oder einer Kombination von verschiedenen Sensoren erreicht werden. So offenbart die US 2014/236477 ein System zur Positionsbestimmung mit einer Wahrnehmungs-basierten Verbesserung, DE 10 2004 047 214 ein Verfahren zur Navigation von Transportfahrzeugen, DE 10 2014 221 777 ein Verfahren zum Betreiben eines Fahrzeuges und DE 10 2011 112 404 ein Verfahren zum Bestimmen der Position eines Kraftfahrzeuges.

Umfeldsensoren sind jedoch anfällig für Fehler und externe Störungen (z.B. aufgrund von schlechten Wetterbedingungen u.ä.), die die Genauigkeit der Sensoren beeinträchtigen. Um die Zuverlässigkeit und Genauigkeit der Objektdetektion zu verbessern, können zwar Ergebnisse verschiedener Sensoren oder verschiedener Algorithmen miteinander kombiniert werden, um so eine Bestätigung für ein detektiertes Objekt zu erhalten. Solche Systeme sind aber aufwendig und, wenn keine weiteren Sensoren verfügbar sind, nicht immer umsetzbar.

Daher besteht ein Bedarf nach Systemen, um die Orientierung von Nutzfahrzeugen bei einer autonomen Betriebsweise zu verbessern.

Zumindest ein Teil der obengenannten Probleme wird durch ein System zum Steuern eines Nutzfahrzeugs nach Anspruch 1, ein dazugehöriges Verfahren nach Anspruch 7 und ein Computerprogrammprodukt nach Anspruch 8 gelöst. Die abhängigen Ansprüche definieren weitere vorteilhafte Ausführungsformen.

Objekte sind statische Objekte und/oder dynamische Objekte, wobei statische Objekte beispielsweise Straßen, Gebäude, Kreuzungen, Referenzpunkte sind und dynamische Objekte beispielsweise andere Fahrzeuge sind, deren Position beispielsweise bekannt ist und die sich daher zur Positionsbestimmung eignen. Das Erfassen des zumindest einen Objekts kann insbesondere ein Erfassen von Positionsdaten und/oder Orientierungsdaten des Nutzfahrzeuges relativ zu dem zumindest einem Objekt umfassen.

Das Identifikationsmodul kann insbesondere zur Identifikation von Objekten eine Abbildung vornehmen, und zwar kann das zumindest eine erfasste Objekt auf die kartographischen Daten abgebildet werden, die durch das Informationsbeschaffungsmodul erhalten wurden. Diese Abbildung kann beispielsweise derart geschehen, dass die kartographischen Daten einen Straßenbereich mit verschiedenen Gebäuden enthält, die mit den durch das Erfassungsmodul erfassten Objekte in der Umgebung des Nutzfahrzeuges verglichen werden. Somit ist eine eindeutige Identifizierung der Position innerhalb des von der Datenbank beschafften Kartenmaterials möglich. Da die Objekte in dem Kartenmaterial eine bekannte Position haben, kann somit die Position des Nutzfahrzeuges bestimmt oder zumindest deren Genauigkeit verbessert werden.

Das Bewegungsmodul ist ausgebildet, um eine Position des Nutzfahrzeuges während der autonomen Bewegung basierend auf den kartographischen Daten aus der Datenbank und basierend auf das zumindest eine erfasste Objekt zu ermitteln. Optional kann das Erfassungsmodul ein Sensormodul aufweisen, das zumindest eines der folgenden Komponenten umfasst: einen Radar, einen Laserscanner, eine drahtlose Übertragungseinrichtung, ein Mobilfunkmodul, ein differentielles oder globales Positionierungssystem (GPS), eine Kamera, weitere Lokalisierungssysteme. Das Identifizierungsmodul kann dann weiter ausgebildet sein, um eine relative Position basierend auf Daten von der Sensoreinheit (im Fahrzeug) oder dem Sensormodul (in dem System) zu ermitteln.

Optional weist ebenfalls die Sensoreinheit des Fahrzeuges zumindest eine der folgenden Komponenten auf: ein differenzielles oder globales Positionierungssystem, eine Kamera, einen Radar, einen Laserscanner, eine drahtlose Kommunikationsschnittstelle oder ein Mobilfunkmodul.

Erfindungsgemäß ist das Identifizierungsmodul ausgebildet um basierend auf Sensordaten von der Sensoreinheit oder dem Sensormodul einen Referenzpunkt in einer Umgebung des Nutzfahrzeuges zu erfassen und eine Position des Nutzfahrzeuges relativ zu dem Referenzpunkt zu ermitteln. Der Referenzpunkt ist eine Markierung auf der Fahrbahn oder an einem Gebäude oder einer Wand, der eine bekannte Position hat, die zur Positionsermittlung genutzt wird.

Das Nutzfahrzeug kann zumindest einen dynamischen Fahrzeugsensor aufweisen, der ausgebildet ist, um eine Geschwindigkeit und/oder Richtungsänderung des Nutzfahrzeuges zu ermitteln. Das Bewegungsmodul kann dann ausgebildet sein, um basierend auf Sensordaten von dem zumindest einen dynamischen Fahrzeugsensor zumindest eine Positionsänderung relativ zu einer zuvor erfassten Position zu bestimmen, um eine Verfolgung eines Bewegungspfades zu ermöglichen.

Optional ist das Informationsbeschaffungsmodul ausgebildet, um die kartographischen Daten in dem Nutzfahrzeug zu speichern oder aus einem Speicher des Nutzfahrzeuges zu lesen.

Das Nutzfahrzeug kann außerdem eine Funkeinheit aufweisen und das Informationsbeschaffungsmodul kann ausgebildet sein, um die Datenbank drahtlos über die Funkeinheit zu kontaktieren, um so Informationen zu beschaffen (herunterzuladen). Der eingeschränkte Bereich umfasst eine Einfahrt, eine Ausfahrt und einen vorbestimmten Zielpunkt. Ein Zugang zu dem eingeschränkten Bereich ist für Personen eingeschränkt. Das Bewegungsmodul ist ausgebildet, um das Nutzfahrzeug von der Einfahrt zu dem vorbestimmten Zielpunkt autonom zu bewegen und von dem vorbestimmten Zielpunkt zu der Ausfahrt autonom zu bewegen (insbesondere fahrerlos).

Die vorliegende Erfindung bezieht sich auch auf Nutzfahrzeug mit einem System, wie es zuvor beschrieben wurde, und Fahrzeugaktuatoren, wobei das Nutzfahrzeug durch eine Ansteuerung der Fahrzeugaktuatoren bewegt werden kann. Das Bewegungsmodul des Systems kann die Ansteuerung ausführen. Es versteht sich, dass das System auch in anderen Fahrzeugen (z.B. Personenkraftwagen) implementiert sein kann und die Erfindung nicht auf Nutzfahrzeug eingeschränkt sein soll.

Die vorliegende Erfindung bezieht sich auch auf ein Verfahren zum Steuern von Nutzfahrzeugen in dem eingeschränkten Bereich. Das Verfahren umfasst die Schritte in Anspruch 7.

Dieses Verfahren kann ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen, wenn das Verfahren auf einem Prozessor (z.B. eine der Fahrzeugsteuereinheiten) läuft. Daher bezieht sich die vorliegende Erfindung ebenfalls auf Computerprogrammprodukt mit darauf gespeichertem Software-Code (Softwareanweisungen), der ausgebildet ist, um eines der zuvor beschriebenen Verfahren auszuführen, wenn der Software-Code durch eine Verarbeitungseinheit ausgeführt wird. Die Verarbeitungseinheit kann jede Form von Computer oder Steuereinheit sein, die einen entsprechenden Mikroprozessor aufweisen, der einen Software-Code ausführen kann.

Ausführungsbeispiele bieten den Vorteil, dass eine verbesserte Positionsbestimmung ermöglicht wird, die insbesondere für eine sichere autonome Bewegung wichtig ist. Diese Verbesserung wird durch die statischen Objekte erreicht, die von der Datenbank mit den kartographischen Daten (Kartenmaterial) heruntergeladen und genutzt werden, um die Objekte unter Nutzung der Umfeldsensoren wiederzuerkennen. Das geschieht auf einfache Weise dadurch, dass die Objekte aus der Umgebung mit den kartographischen Daten abgeglichen werden (Objekte werden aufeinander abgebildet).

Besondere Vorteile bieten Ausführungsbeispiele insbesondere in speziellen, nicht standardisierten oder eingeschränkten Bereichen, wo die Positionen von statischen Objekten im Allgemeinen bekannt sind und genutzt werden können, um die Positionsermittlung in einer Umgebung des Fahrzeuges weiter zu verbessern.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.
- Fig. 1: zeigt ein Ausführungsbeispiel für ein System zum Steuern eines Nutzfahrzeugs in einem eingeschränkten Bereich.
- Fig. 2: zeigt ein Fahrzeug, wie es in Ausführungsbeispielen der Erfindung genutzt werden kann.
- Fig. 3: zeigt kartografische Daten für einen beispielhaften eingeschränkten Bereich.
- Fig. 4: zeigt ein Flussdiagramm für ein Verfahren zum Steuern von Nutzfahrzeug.

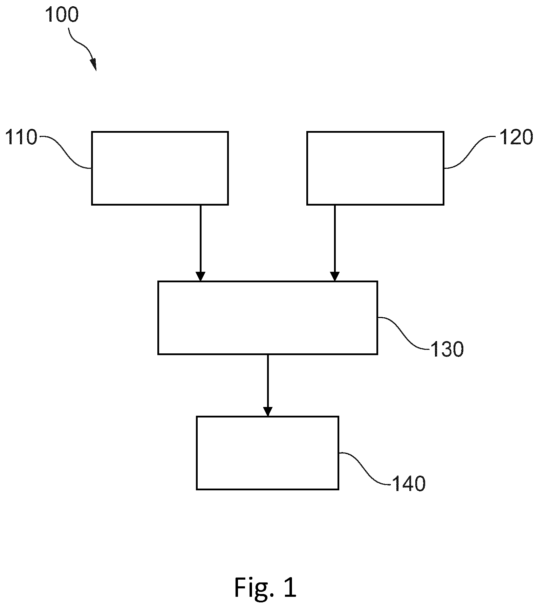

**Fig. 1** zeigt ein Ausführungsbeispiel für ein System 100, das geeignet ist zum Steuern von Nutzfahrzeugen in einem eingeschränkten Bereich, wobei das Nutzfahrzeug eine Sensoreinheit zum Erfassen von Objekten in einer Umgebung des Nutzfahrzeuges aufweist. Das System 100 umfasst ein Informationsbeschaffungsmodul 110, ein Erfassungsmodul 120, ein Identifikationsmodul 130 und ein Bewegungsmodul 140. Das Informationsbeschaffungsmodul 110 ist ausgebildet, um Informationen über den eingeschränkten Bereich aus einer (externen) Datenbank zu beschaffen, wobei die beschafften Informationen kartographische Daten von Objekten in dem eingeschränkten Bereich aufweisen und beispielsweise durch ein Herunterladen erhalten werden können. Das Erfassungsmodul 120 ist ausgebildet, um zumindest ein Objekt in der Umgebung des Fahrzeuges unter Nutzung der Sensoreinheit des Nutzfahrzeuges zu erfassen. Das Identifikationsmodul 130 ist ausgebildet, um das zumindest eine erfasste Objekt in den kartographischen Daten zu identifizieren. Das Bewegungsmodul 140 ist ausgebildet, um ein autonomes Bewegen des Nutzfahrzeuges in dem eingeschränkten Bereich basierend auf den identifizierten Objekten zu ermöglichen.

Daher ist das System in der Lage, das Nutzfahrzeug innerhalb des Bereiches sicher zu bewegen und Positionswechsel autonom durchzuführen. Insbesondere ist es möglich, dass ein oder mehrere Zielpunkte innerhalb des Bereiches in einer bestimmten Reihenfolge abgefahren werden. An dem vorbestimmten Zielpunkt kann eine bestimmte Handlung an dem Fahrzeug wie beispielsweise ein Be- oder Entladung, aber auch eine Reinigung oder Wartung des Nutzfahrzeuges oder ein Betanken oder Aufladen von Batterien (d.h. wo ein Energieladezustand geändert wird) oder eine beliebige Kombination daraus durchgeführt werden.

Das System 100 kann ganz oder teilweise durch Software implementiert sein, die in einer Steuereinheit des Nutzfahrzeuges installiert ist, um die beschriebenen Funktionen auszuführen. Das System 100 kann aber auch teilweise und ganz in einer Steuereinheit außerhalb des Nutzfahrzeuges implementiert sein.

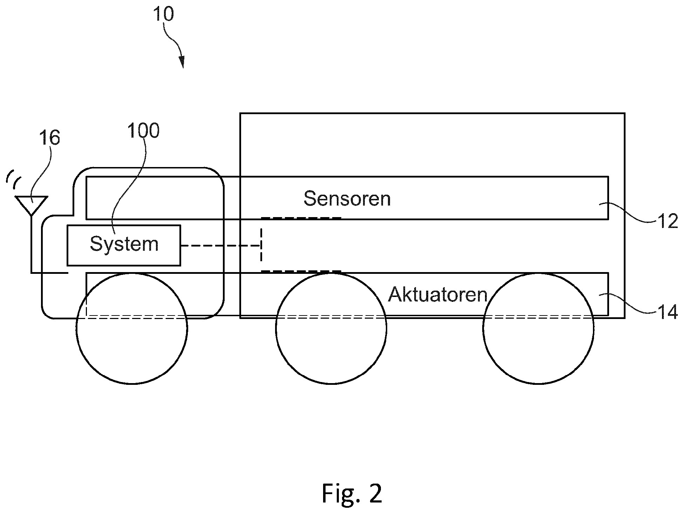

**Fig. 2** zeigt ein Ausführungsbeispiel für ein Fahrzeug 10, insbesondere ein Nutzfahrzeug, welches genutzt werden kann, um innerhalb des eingeschränkten Bereiches autonom betrieben zu werden. Das Nutzfahrzeug 10 umfasst das System 100, welches beispielsweise innerhalb eines Steuergerätes des Fahrzeuges 10 installiert oder als separates Hardware in dem Fahrzeug 10 untergebracht sein kann.

Das Nutzfahrzeug 10 umfasst weiter eine Sensoreinheit 12, die ausgebildet ist, um ein Umfeld des Fahrzeuges 10 zu erfassen (zum Beispiel um Entfernungen zu anderen Objekten zu ermitteln oder um Bewegungsänderungen oder Geschwindigkeitsänderungen zu erfassen). Das Nutzfahrzeug 10 umfasst weiter eine Vielzahl von Fahrzeugaktuatoren 14, die beispielsweise ausgebildet sind, um das Fahrzeug 10 entlang eines Pfades zu steuern. Hierzu gehören insbesondere Lenk- und Bremsaktuatoren, die das Fahrzeug 10 lenken oder abbremsen. Ebenso gehören dazu Fahrzeugaktuatoren 14, die eine Beschleunigung des Fahrzeugs 10 bewirken können. Optional umfasst das Fahrzeug 10 ein eigenes Kommunikationsmodul 16, welches eine Funkverbindung zu einem externen Netzwerk herstellen kann.

Das System 100 kann beispielsweise ausgebildet sein, um das Kommunikationsmodul 16 des Fahrzeuges 10 zu nutzen, um Daten (z.B. die kartografischen Daten) von dem externen Netzwerk zu erhalten oder dorthin zu senden. Außerdem wird das Kommunikationsmodul 16 genutzt um das Nutzfahrzeug 10 mit einem Managementsystem des eingeschränkten Bereiches zu verbinden, um von dort Daten für einen zu fahrenden Pfad 200 zu erhalten.

Das Nutzfahrzeug 10 kann beispielsweise ein Bus, ein Lastkraftwagen, eine Zugmaschine für einen Trailer oder eine Kombination von mehreren Fahrzeugteilen umfassen (z. B. einschließlich eines Anhängers).

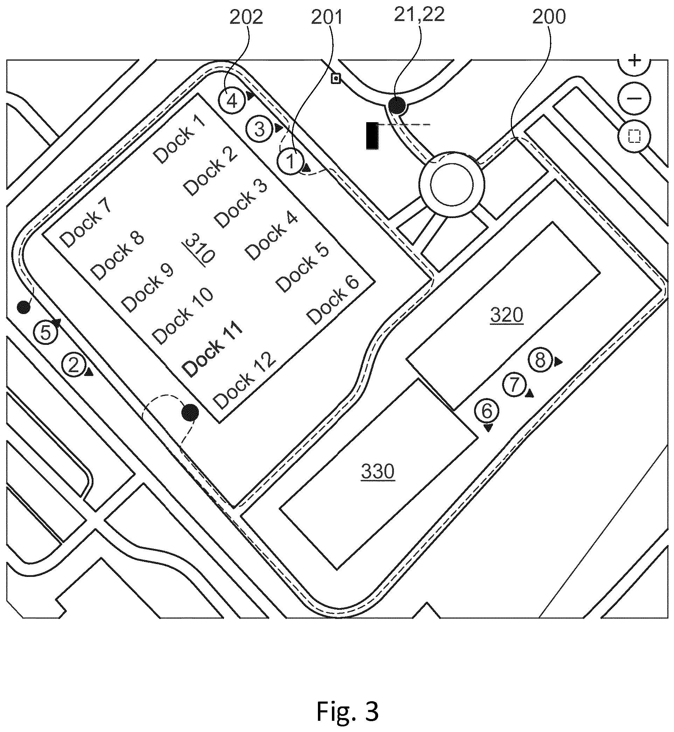

**Fig. 3** zeigt beispielhaft eine Karte von dem speziellen, nicht standardisierten oder eingeschränkten Bereich. Die Karte kann noch mit weiteren Informationen über die statischen Objekte und deren Position ergänzt sein (nicht gezeigt).

Der gezeigte Bereich umfasst eine Vielzahl von statischen Objekte, die zur Verbesserung der Fahrzeuglokalisierung genutzt werden können. Beispielhaft umfasst der Bereich als statische Objekte: eine Einfahrt 21/Ausfahrt 22, zwei vorbestimmte Zielpunkte 201, 202 und drei Gebäude 310, 320, 330. Für das Nutzfahrzeug kann ein Pfad 200 berechnet werden, um beispielsweise das Fahrzeug autonom in Bereich zu operieren.

An der Einfahrt 21 kann eine Zugangskontrolle vorgesehen sein, sodass sichergestellt ist, dass auf dem eingeschränkten Bereich nur Nutzfahrzeuge 10 oder Fahrzeuge unterwegs sind, die den Anforderungen des eingeschränkten Bereiches genügen. Das Nutzfahrzeug 10 kann beispielsweise ein Fahrzeug sein, wie es in der Fig. 2 gezeigt ist. Als Teil des Pfades 200 kann eine Pfadspezifikation an das Fahrzeug 10 übermittelt werden, aus der die abzufahrenden Wegpunkte hervorgehen (an welchen Positionen z.B. wie abzubiegen ist). Der Pfad 200 führt beispielsweise an verschiedenen Gebäuden 310, 320, 330 vorbei, die durch die Sensoreinheit 12 des Nutzfahrzeuges 10 mit einer Umfeldsensorik erfasst werden können. Der Pfad 200 führt dann beispielhaft zu den zwei vorbestimmte Zielpunkte 201, 202, die beispielsweise Andockstationen an einem Lagergebäude 310 sind, wo das Nutzfahrzeug 10 andockt, um beispielsweise Be- und Entladetätigkeiten durchzuführen.

Das Bewegungsmodul 140 kann außerdem Planungsdaten erhalten, um das Fahrzeug 10 autonom zu den unterschiedlichen Zielpunkten 201, 202 zu navigieren, wo die geplanten Handlungen an dem Nutzfahrzeug auszuführen sind. Danach kann das Bewegungsmodul 140 das Fahrzeug 10 autonom zu der Ausfahrt 22 navigieren. Die Ausfahrt 22 kann der gleiche Punkt sein wie die Einfahrt 21, wo der Fahrer des Fahrzeuges 10 die Kontrolle über das Fahrzeug 10 zurück übernehmen kann und manuell fahrend das Fahrzeug 10 aus dem eingeschränkten Bereich herausfährt.

Das System 100 kann ebenfalls Schnittstellen zu der Fahrzeugsensoreinheit 12 und zu den Fahrzeugaktuatoren 14 umfassen, um einen Zustand des Fahrzeuges 10 und der Umgebung festzustellen (z.B. Detektion der Gebäude 320, 330, 310 oder eine relative Orientierung dazu) und um basierend darauf eine Steuerung des Fahrzeugzustandes durchzuführen, und zwar ohne dass dazu eine Hilfe des Fahrers notwendig wäre. Diese Schnittstellen können beispielsweise eine drahtlose Kommunikation erlauben.

Der gezeigte eingeschränkte Bereich stellt lediglich ein Beispiel dar. Das System 100 ist insbesondere für Bereiche einsetzbar, wo eine hohe Genauigkeit hinsichtlich der Navigation des Fahrzeuges 10 innerhalb kurzer Zeit erforderlich ist und wo es häufig zu Schäden bei einer manuellen Operation der Nutzfahrzeuge 10 kommt. Gerade in solchen Bereichen stellt das System 100 ein sicheres Operieren des Nutzfahrzeuges 10 sicher. Beispielsweise sind dies andere Transportfahrzeug (eine Fähre, eine Eisenbahn, ein Flugzeug, ein Straßenlastzug, etc.), auf denen das Nutzfahrzeug 10 mit hoher Präzession abgestellt werden soll.

Ausführungsbeispielen der vorliegenden Erfindung kombinieren somit die autonome Betriebsweise eines Fahrzeuges auf speziellen, nicht standardisierten oder eingeschränkten Bereichen, eines ist in der Fig. 3 beispielhaft gezeigt ist, mit einer Lokalisierungsfunktion des Fahrzeuges 10. Die Lokalisierung erfolgt wie gesagt unter Nutzung der Sensoreinheit 12. Unter Nutzung von Kommunikationsmitteln 16 zwischen dem Fahrzeug 10 und einer Infrastruktur des Bereiches können die kartografischen Daten heruntergeladen bzw. erforderliche Informationen erhalten werden.

Erfindungsgemäß ist es möglich, die gegenwärtige Fahrzeugposition relativ zu einem Referenzpunkt (oder einem Objekt) zu ermitteln, um so eine relative Position des Fahrzeuges zu bestimmen. Vorteilhafterweise kann diese Positionsbestimmung dynamisch (zeitabhängig) erfolgen, so dass ebenfalls ein Tracking einer sich ändernden Position des Fahrzeuges möglich wird. Dazu können beispielsweise dynamische Fahrzeugsensoren wie beispielsweise ein Tachometer, ein Drehratenmesser, ein Lenkwinkelsensor oder ähnliche Sensoren genutzt werden, um beispielsweise die Bewegung von dem Referenzpunkt weg zu ermitteln.

Die Datenbank mit dem Kartenmaterial des Bereiches (siehe Fig. 3) kann sich bereits auf dem Fahrzeug 10 befindet oder von einer Infrastruktur des eingeschränkten Bereiches heruntergeladen werden kann. Abgesehen von Fahrt- oder Fahrspurinformationsmaterial stellt die Datenbank ebenfalls eine Beschreibung der statischen Objekte wie beispielsweise der Gebäuden 310, 320, 330, Brücken, Überführungen oder anderen Hindernissen enthalten und dem Fahrzeug bereit.

Unter Nutzung der Fahrzeugposition und der Kartendatenbank mit den statischen Objektinformationen ist es somit möglich, diese Objekte in der Umgebung des Fahrzeuges 10 in einem Umfelddetektionsprozess einzubeziehen, wodurch wie gesagt die Zuverlässigkeit und Genauigkeit der Fahrzeuglokalisierung innerhalb des Bereiches möglich wird.

Die Kenntnis der statischen Objekten in dem eingeschränkten Bereich ist insbesondere dann wichtig, wenn andere Lokalisierungssysteme wie beispielsweise ein GPS-System nicht zur Verfügung stehen oder ein entsprechendes Signal nicht empfangbar ist. Daher können die statischen Objekte genutzt werden, um die Position des Fahrzeuges in dem eingeschränkten Bereich unabhängig von anderen Positionierungssystemen genauer zu bestimmen. Die Position, die Bewegung oder die Bewegungsrichtung des Fahrzeuges kann daher genauer abgeschätzt werden - auch wenn dafür die gewöhnlich genutzten Signale nicht zur Verfügung stehen (zum Beispiel bei einem Signalverlust des GPS-Gerätes).

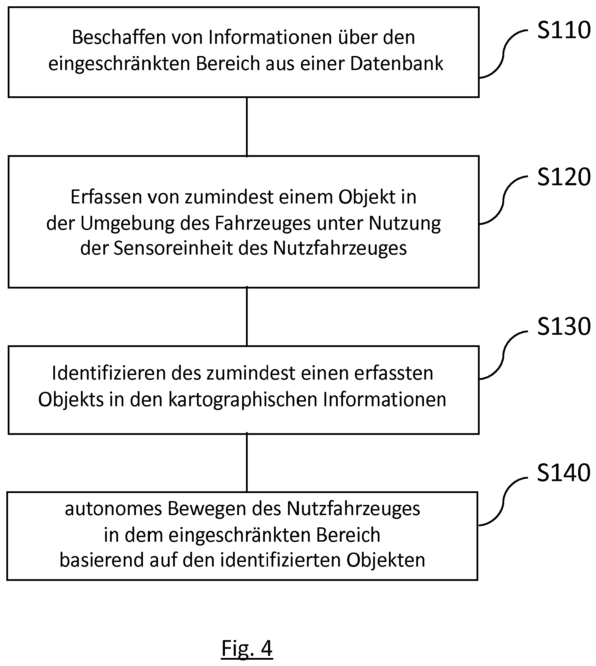

**Fig. 4** zeigt Flussdiagramm für ein Verfahren zum Steuern des Nutzfahrzeugs in einem eingeschränkten Bereich. Das Verfahren umfasst die Schritte:
- Beschaffen S110 von Informationen über den eingeschränkten Bereich aus einer Datenbank, wobei die beschafften Informationen kartographische Daten von Objekten in dem eingeschränkten Bereich umfassen;
- Erfassen S120 von zumindest einem Objekt in der Umgebung des Fahrzeuges 10 unter Nutzung der Sensoreinheit 12 des Nutzfahrzeuges; und
- Identifizieren S130 des zumindest einen erfassten Objekts in den kartographischen Informationen; und
- autonomes Bewegen S140 des Nutzfahrzeuges 10 in dem eingeschränkten Bereich basierend auf den identifizierten Objekten

Das Verfahren oder zumindest Teile davon kann/können ebenfalls Computerimplementiert sein, d.h. es kann durch Anweisungen umgesetzt sein, die auf einem Speichermedium gespeichert sind und in der Lage sind, die Schritte des Verfahrens auszuführen, wenn es auf einem Prozessor läuft. Die Anweisungen umfassen typischerweise eine oder mehrere Anweisungen, die auf unterschiedliche Art auf unterschiedlichen Medien in oder peripher zu einer Steuereinheit (mit einem Prozessor) gespeichert sein können, die, wenn sie gelesen und durch die Steuereinheit ausgeführt werden, die Steuereinheit dazu veranlassen, Funktionen, Funktionalitäten und Operationen auszuführen, die zum Ausführen eines Verfahrens gemäß der vorliegenden Erfindung notwendig sind.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 10: Nutzfahrzeug
- 12: Fahrzeugsensoreinheit
- 14: Fahrzeugaktuatoren
- 16: Funkmodul
- 21, 22: Einfahrt/Ausfahrt
- 110: Informationsbeschaffungsmodul
- 120: Erfassungsmodul
- 130: Identifikationsmodul
- 140: Bewegungsmodul
- 310,320,330: Gebäude
- 201, 202, ...: vorbestimmte Zielpunkte

## Patentansprüche

1. System (100) zum Steuern von Nutzfahrzeugen (10) in einem eingeschränkten Bereich, wobei das Nutzfahrzeug (10) eine Sensoreinheit (12) aufweist, die ausgebildet ist, um Objekte in einer Umgebung des Nutzfahrzeuges (10) zu erfassen, und das Nutzfahrzeug (10) ein Kommunikationsmodule (16) aufweist, und wobei der eingeschränkte Bereich eine Einfahrt (21), eine Ausfahrt (22) und einen vorbestimmten Zielpunkt (201) aufweist, und ein Zugang zu dem eingeschränkten Bereich für Personen eingeschränkt ist, das System (100) umfasst:
- ein Informationsbeschaffungsmodul (110) zum Beschaffen von Informationen aus einer Datenbank über den eingeschränkten Bereich, wobei die beschafften Informationen kartographische Daten von Objekten in dem eingeschränkten Bereich umfassen;
**gekennzeichnet durch**
- ein Erfassungsmodul (120) zum Erfassen von zumindest einem Objekt in der Umgebung des Fahrzeuges (10) unter Nutzung der Sensoreinheit (12) des Nutzfahrzeuges (10), wobei das zumindest eine Objekt ein statisches oder dynamisches Objekt sein kann, wobei ein dynamisches Objekt anderes Fahrzeug ist, dessen Position bekannt ist und sich zur Positionierung eignet und statische Objekte Straßen, Gebäude und Kreuzungen sind;
- ein Identifikationsmodul (130) zum eindeutigen Identifizieren des zumindest einen erfassten Objekts in den kartographischen Daten und zur Ermittlung einer relativen Position basierend auf Daten von der Sensoreinheit (12), wobei das Identifizierungsmodul (130) weiter ausgebildet ist, um basierend auf Sensordaten von der Sensoreinheit (12) einen Referenzpunkt in einer Umgebung des Nutzfahrzeuges (10) zu erfassen und eine Position des Nutzfahrzeuges (10) relativ zu dem Referenzpunkt zu ermitteln, wobei der Referenzpunkt eine Markierung auf einer Fahrbahn oder an einem Gebäude oder einer Wand umfasst, der eine bekannte Position hat; und
- ein Bewegungsmodul (140), das ausgebildet ist, um
ein autonomes Bewegen des Nutzfahrzeuges (10) in dem eingeschränkten Bereich basierend auf dem mindestens einen identifizierten Objekt zu ermöglichen
und eine Position des Nutzfahrzeuges (10) während der autonomen Bewegung basierend auf den kartographischen Daten aus der Datenbank und basierend auf das zumindest eine identifizierte Objekt zu ermitteln, und zwar auch dann, wenn andere Lokalisierungssysteme wie ein globales Positionierungssystem nicht verfügbar sind,
und wobei das Nutzfahrzeug (10) von der Einfahrt (21) zu dem vorbestimmten Zielpunkt (201) autonom zu bewegen und von dem vorbestimmten Zielpunkt (201) zu der Ausfahrt (22) autonom zu bewegen,
wobei das System (100) weiter ausgebildet ist, um das Kommunikationsmodul (16) zu nutzen das Nutzfahrzeug (10) mit einem Managementsystem des eingeschränkten Bereiches zu verbinden, um von dort Daten für einen zu fahrenden Pfad (200) zu erhalten, aus denen abzufahrende Wegpunkte hervorgehen.

2. System (100) nach Anspruch 1,
**dadurch gekennzeichnet, dass**
das Sensormodul oder die Sensoreinheit (12) zumindest eine der folgenden Komponenten aufweist: ein differenzielles oder globales Positionierungssystem, eine Kamera, einen Radar, einen Laserscanner, eine drahtlose Kommunikationsschnittstelle oder ein Mobilfunkmodul.

3. System (100) nach einem der vorhergehenden Ansprüche, wobei das Nutzfahrzeug (10) zumindest einen dynamischen Fahrzeugsensor aufweist, der ausgebildet ist, um eine Geschwindigkeit und/oder Richtungsänderung des Nutzfahrzeuges (10) zu ermitteln,
**dadurch gekennzeichnet, dass**
das Bewegungsmodul (140) ausgebildet ist, um basierend auf Sensordaten von dem zumindest einen dynamischen Fahrzeugsensor zumindest eine Positionsänderung relativ zu einer zuvor erfassten Position zu bestimmen, um eine Verfolgung eines Bewegungspfades (200) zu ermöglichen.

4. System (100) nach einem der vorhergehenden Ansprüche,
**dadurch gekennzeichnet, dass**
das Informationsbeschaffungsmodul (110) ausgebildet ist, um die kartographischen Daten in dem Nutzfahrzeug (10) zu speichern.

5. System (100) nach einem der vorhergehenden Ansprüche, wobei das Nutzfahrzeug (10) eine Funkeinheit (16) aufweist,
**dadurch gekennzeichnet, dass**
das Informationsbeschaffungsmodul (110) ausgebildet ist, um die Datenbank drahtlos über die Funkeinheit (16) zu kontaktieren, um die Informationen drahtlos zu übertragen.

6. Nutzfahrzeug (10),
**gekennzeichnet durch:**
- ein System (100) nach einem der vorhergehenden Ansprüchen; und
- Fahrzeugaktuatoren (14),
wobei das Bewegungsmodul (140) ausgebildet ist, das Nutzfahrzeug (10) durch eine Ansteuerung der Fahrzeugaktuatoren (14) zu bewegen.

7. Verfahren zum Steuern von Nutzfahrzeugen (10) in einem eingeschränkten Bereich, wobei das Nutzfahrzeug (10) eine Sensoreinheit (12) aufweist, die ausgebildet ist, um Objekte in einer Umgebung des Nutzfahrzeuges (10) zu erfassen, und das Nutzfahrzeug (10) ein Kommunikationsmodule (16) aufweist, und wobei der eingeschränkte Bereich eine Einfahrt (21), eine Ausfahrt (22) und einen vorbestimmten Zielpunkt (201) aufweist, und ein Zugang zu dem eingeschränkten Bereich für Personen eingeschränkt ist, umfassend:
- Beschaffen (S110) von Informationen über den eingeschränkten Bereich aus einer Datenbank, wobei die beschafften Informationen kartographische Daten von Objekten in dem eingeschränkten Bereich umfassen;
**gekennzeichnet durch**
- Erfassen (S120) von zumindest einem Objekt in der Umgebung des Fahrzeuges (10) unter Nutzung der Sensoreinheit (12) des Nutzfahrzeuges (10);
- Identifizieren (S130) des zumindest einen erfassten Objekts in den kartographischen Daten, wobei das zumindest eine Objekt ein statisches oder dynamisches Objekt sein kann, wobei ein dynamisches Objekt ein anderes Fahrzeug ist, dessen Position bekannt ist und sich zur Positionierung eignet und statische Objekte Straßen, Gebäude und Kreuzungen sind;
- autonomes Bewegen (S140) des Nutzfahrzeuges (10) in dem eingeschränkten Bereich basierend auf dem mindestens einen identifizierten Objekt;
- Ermitteln einer Position des Nutzfahrzeuges (10) während der autonomen Bewegung basierend auf den kartographischen Daten aus der Datenbank und basierend auf das zumindest eine identifiziert Objekt, und zwar auch dann, wenn andere Lokalisierungssysteme wie ein globales Positionierungssystem nicht verfügbar sind, wobei das Ermitteln ein Ermitteln einer relativen Position basierend auf Daten von der Sensoreinheit (12) umfasst, wobei weiter basierend auf Sensordaten von der Sensoreinheit (12) ein Referenzpunkt in einer Umgebung des Nutzfahrzeuges (10) erfasst wird und eine Position des Nutzfahrzeuges (10) relativ zu dem Referenzpunkt ermittelt wird und der Referenzpunkt eine Markierung auf einer Fahrbahn oder an einem Gebäude oder einer Wand umfasst, der eine bekannte Position hat; und
- autonomes Bewegen des Nutzfahrzeugs (10) von der Einfahrt (21) zu dem vorbestimmten Zielpunkt (201) und von dem vorbestimmten Zielpunkt (201) zu der Ausfahrt (22),
wobei das Kommunikationsmodul (16) genutzt wird, um das Nutzfahrzeug (10) mit einem Managementsystem des eingeschränkten Bereiches zu verbinden und von dort Daten für einen zu fahrenden Pfad (200) zu erhalten, aus denen abzufahrende Wegpunkte hervorgehen.

8. Computerprogrammprodukt mit darauf gespeicherter Software, die ausgebildet ist, um das Verfahren nach Anspruch 7 auszuführen, wenn die Software auf einer Datenverarbeitungseinheit ausgeführt wird.

## Claims

1. System (100) for controlling commercial vehicles (10) in a restricted area, wherein the commercial vehicle (10) has a sensor unit (12) which is configured to detect objects in an environment of the commercial vehicle (10), and the commercial vehicle (10) has a communications module (16), and wherein the restricted area has an entrance (21), an exit (22) and a predetermined destination (201), and access to the restricted area is restricted for people, the system (100) comprises:
an information acquisition module (110) for acquiring information from a database about the restricted area, wherein the acquired information comprises cartographic data on objects in the restricted area;
**characterized by**
a detection module (120) for detecting at least one object in the environment of the vehicle (10) using the sensor unit (12) of the commercial vehicle (10), wherein the at least one object may be a static or dynamic object, wherein a dynamic object is another vehicle whose position is known and is suitable for positioning, and static objects are roads, buildings and intersections;
an identification module (130) for clearly identifying the at least one detected object in the cartographic data and for determining a relative position based on data from the sensor unit (12), wherein the identification module (130) is further configured to detect a reference point in an environment of the commercial vehicle (10) based on sensor data from the sensor unit (12) and to determine a position of the commercial vehicle (10) relative to the reference point, wherein the reference point comprises a marking on a road or on a building or a wall that has a known position; and
a movement module (140) which is configured to
enable autonomous movement of the commercial vehicle (10) in the restricted area, based on the at least one identified object,
and to determine a position of the commercial vehicle (10) during the autonomous movement based on the cartographic data from the database and based on the at least one identified object, even if other localization systems such as a global positioning system are not available,
and wherein the commercial vehicle (10) is to be moved autonomously from the entrance (21) to the predetermined destination (201) and autonomously from the predetermined destination (201) to the exit (22),
wherein the system (100) is further configured to use the communications module (16) to connect the commercial vehicle (10) to a management system of the restricted area, in order to obtain data from there for a path (200) to be traveled, from which waypoints to be departed from are derived.

2. System (100) according to claim 1,
**characterized in that**
the sensor module or the sensor unit (12) has at least one of the following components: a differential or global positioning system, a camera, a radar, a laser scanner, a wireless communications interface or a mobile radio module.

3. System (100) according to any one of the preceding claims, wherein the commercial vehicle (10) has at least one dynamic vehicle sensor which is configured to determine a speed and/or direction change of the commercial vehicle (10),
**characterized in that**
the movement module (140) is configured to determine, based on sensor data from the at least one dynamic vehicle sensor, at least one change in position relative to a previously detected position in order to enable tracking of a movement path (200).

4. System (100) according to any one of the preceding claims,
**characterized in that**
the information acquisition module (110) is configured to store the cartographic data in the commercial vehicle (10).

5. System (100) according to any one of the preceding claims, wherein the commercial vehicle (10) has a radio unit (16),
**characterized in that**
the information acquisition module (110) is configured to contact the database wirelessly via the radio unit (16) in order to transmit the information wirelessly.

6. Commercial vehicle (10),
**characterized by:**
- a system (100) according to any one of the preceding claims; and
- vehicle actuators (14),
wherein the movement module (140) is configured to move the commercial vehicle (10) by controlling the vehicle actuators (14).

7. Method for controlling commercial vehicles (10) in a restricted area, wherein the commercial vehicle (10) has a sensor unit (12) which is configured to detect objects in an environment of the commercial vehicle (10), and the commercial vehicle (10) has a communications module (16), and wherein the restricted area has an entrance (21), an exit (22) and a predetermined destination (201), and access to the restricted area is restricted for people, comprising:
- obtaining (S110) information about the restricted area from a database, wherein the obtained information comprises cartographic data on objects in the restricted area;
**characterized by**
- detecting (S120) at least one object in the environment of the vehicle (10) using the sensor unit (12) of the commercial vehicle (10);
- identifying (S130) the at least one detected object in the cartographic data, wherein the at least one object may be a static or dynamic object, wherein a dynamic object is another vehicle whose position is known and is suitable for positioning, and static objects are roads, buildings and intersections;
- autonomously moving (S140) the commercial vehicle (10) in the restricted area based on the at least one identified object;
- determining a position of the commercial vehicle (10) during autonomous movement based on the cartographic data from the database and based on the at least one identified object, even if other localization systems such as a global positioning system are not available, wherein the determination comprises determining a relative position based on data from the sensor unit (12), wherein, further based on sensor data from the sensor unit (12), a reference point in an environment of the commercial vehicle (10) is detected and a position of the commercial vehicle (10) relative to the reference point is determined, and the reference point comprises a marking on a road or on a building or a wall that has a known position; and
- autonomously moving the commercial vehicle (10) from the entrance (21) to the predetermined destination (201) and from the predetermined destination (201) to the exit (22),
wherein the communications module (16) is used to connect the commercial vehicle (10) to a management system of the restricted area and to receive data from there for a path (200) to be traveled on, from which waypoints to be departed from are derived.

8. Computer program product with software stored thereon, which is configured to execute the method according to claim 7 when the software is executed on a data processing unit.

## Revendications

1. Système (100) de commande de véhicules utilitaires (10) dans une zone délimitée, dans lequel le véhicule utilitaire (10) présente une unité de détection (12) qui est formée afin de détecter des objets dans un environnement du véhicule utilitaire (10), et le véhicule utilitaire (10) présente un module de communication (16), et dans lequel la zone délimitée présente une entrée (21), une sortie (22) et un point cible (201) prédéterminé, et un accès à la zone délimitée pour des personnes est limité, le système (100) comprend :
- un module d'acquisition d'informations (110) pour l'acquisition d'informations à partir d'une base de données sur la zone délimitée, dans lequel les informations acquises comprennent des données cartographiques d'objets dans la zone délimitée ;
**caractérisé par**
- un module de détection (120) pour la détection d'au moins un objet dans l'environnement du véhicule (10) en utilisant l'unité de détection (12) du véhicule utilitaire (10), dans lequel l'au moins un objet peut être un objet statique ou dynamique, dans lequel un objet dynamique est un autre véhicule, dont la position est connue et est appropriée au positionnement et des objets statiques sont des routes, des bâtiments et des intersections ;
- un module d'identification (130) pour l'identification claire d'au moins un objet détecté dans les données cartographiques et pour la détermination d'une position relative sur la base de données de l'unité de détection (12), dans lequel le module d'identification (130) est en outre formé afin de détecter sur la base de données de détection de l'unité de détection (12) un point de référence dans un environnement du véhicule utilitaire (10) et de déterminer une position du véhicule utilitaire (10) par rapport au point de référence, dans lequel le point de référence comprend un marquage sur une chaussée ou sur un bâtiment ou une paroi qui présente une position connue ; et
- un module de déplacement (140) qui est formé afin
de permettre un déplacement autonome du véhicule utilitaire (10) dans la zone délimitée sur la base de l'au moins un objet identifié
et de déterminer une position du véhicule utilitaire (10) pendant le déplacement autonome sur la base des données cartographiques à partir de la base de données et sur la base de l'au moins un objet identifié, et ce aussi lorsque d'autres systèmes de localisation tels qu'un système de positionnement global ne sont pas disponibles,
et dans lequel le véhicule utilitaire (10) se déplace de manière autonome de l'entrée (21) au point cible (201) prédéterminé et se déplace de manière autonome du point cible (201) prédéterminé à la sortie (22),
dans lequel le système (100) est en outre formé afin d'utiliser le module de communication (16) pour relier le véhicule utilitaire (10) à un système de gestion de la zone délimitée afin d'obtenir de là-bas des données pour un chemin (200) à parcourir, d'où émergent des points de trajet à suivre.

2. Système (100) selon la revendication 1,
**caractérisé en ce que**
le module de détection ou l'unité de détection (12) présente au moins l'un des composants suivants : un système de positionnement différentiel ou global, une caméra, un radar, un scanner laser, une interface de communication sans fil ou un module de téléphonie mobile.

3. Système (100) selon l'un quelconque des revendications précédentes, dans lequel le véhicule utilitaire (10) présente au moins un capteur de véhicule dynamique qui est formé afin de déterminer une vitesse et/ou une modification de direction du véhicule utilitaire (10),
**caractérisé en ce que**
le module de déplacement (140) est formé afin de déterminer sur la base de données de détection de l'au moins un capteur de véhicule dynamique au moins une modification de position par rapport à une position détectée précédemment pour permettre une poursuite d'un chemin de déplacement (200).

4. Système (100) selon l'une quelconque des revendications précédentes,
**caractérisé en ce que**
le module d'acquisition d'informations (110) est formé afin d'enregistrer les données cartographiques dans le véhicule utilitaire (10).

5. Système (100) selon l'une quelconque des revendications précédentes, dans lequel le véhicule utilitaire (10) présente une unité radio (16),
**caractérisé en ce que**
le module d'acquisition d'informations (110) est formé afin de contacter la base de données sans fil par le biais de l'unité radio (16) pour transmettre les informations sans fil.

6. Véhicule utilitaire (10),
**caractérisé par** :
un système (100) selon l'une quelconque des revendications précédentes ; et
- des actionneurs de véhicule (14),
dans lequel le module de déplacement (140) est formé afin de déplacer le véhicule utilitaire (10) par une commande des actionneurs de véhicule (14).

7. Procédé de commande de véhicules utilitaires (10) dans une zone délimitée, dans lequel le véhicule utilitaire (10) présente une unité de détection (12) qui est formée afin de détecter des objets dans un environnement du véhicule utilisateur (10), et le véhicule utilitaire (10) présente un module de communication (16), et dans lequel la zone délimitée présente une entrée (21), une sortie (22) et un point cible (201) prédéterminé, et un accès à la zone délimitée pour des personnes est limité, comprenant :
- l'acquisition (S110) d'informations sur la zone délimitée à partir d'une base de données, dans lequel les informations acquises comprennent des données cartographiques d'objets dans la zone délimitée ;
**caractérisé par**
- la détection (S120) d'au moins un objet dans l'environnement du véhicule (10) en utilisant l'unité de détection (12) du véhicule utilitaire (10) ;
- l'identification (S130) de l'au moins un objet détecté dans les données cartographiques, dans lequel l'au moins un objet peut être un objet statique ou dynamique, dans lequel un objet dynamique est un autre véhicule, dont la position est connue et est appropriée au positionnement et des objets statiques sont des routes, des bâtiments et des intersections ;
- le déplacement autonome (S140) du véhicule utilitaire (10) dans la zone délimitée sur la base de l'au moins un objet identifié ;
- la détermination d'une position du véhicule utilitaire (10) pendant le déplacement autonome sur la base des données cartographiques de la base de données et sur la base de l'au moins un objet identifié, et ce aussi lorsque d'autres systèmes de localisation tels qu'un système de positionnement global ne sont pas disponibles, dans lequel la détermination comprend une détermination d'une position relative sur la base de données de l'unité de détection (12), dans lequel un point de référence dans un environnement du véhicule utilitaire (10) est en outre détecté sur la base de données de détection de l'unité de détection (12) et une position du véhicule utilitaire (10) est déterminée par rapport au point de référence et le point de référence comprend un marquage sur une chaussée ou sur un bâtiment ou une paroi qui présente une position connue ; et
- le déplacement autonome du véhicule utilitaire (10) de l'entrée (21) vers le point cible prédéterminé (201) et du point cible prédéterminé (201) vers la sortie (22) ;
dans lequel le module de communication (16) est utilisé afin de relier le véhicule utilitaire (10) à un système de gestion de la zone délimitée afin d'obtenir de là-bas des données pour un chemin (200) à parcourir, d'où émergent des points de trajet à suivre.

8. Produit de programme informatique avec un logiciel enregistré sur celui-ci qui est formé afin de mettre en œuvre le procédé selon la revendication 7 lorsque le logiciel est exécuté sur une unité de traitement de données.
